# EUROPEAN PATENT APPLICATION

(11) **EP 2 896 745 A1**
(43) Date of publication of application: **22.07.2015**
(21) Application number: 14151254.1
(22) Date of filing: 15.01.2014
(51) Int. Cl.: E01B 31/13, B23C 3/00, B23C 5/22, B23C 5/08

(54) **Milling tool**

(71) Applicant: Pramet Tools, S.R.O., 787 53 Sumperk (CZ)
(72) Inventor: Suchý, Michal, 78964 Bohdikov (CZ)
(74) Representative: Glindell, Maria

(57) **Abstract**

In a replaceable cassette (25) for a railway track milling tool (21), a body of the cassette, when viewed from a side thereof, defines an arc of an annulus having a radially inner surface and a radially outer surface between two radially extending end surfaces, the arc being less than 360 degrees. The cassette includes a plurality of insert-receiving pockets disposed on the radially outer surface. A groove (35) is provided in a radially inner surface (45) of the cassette and extends in a direction away from one of the two radially extending end surfaces (49, 51) towards an opposite one of the two radially extending end surfaces. The present invention also relates to a railway track milling tool.

## Description

### BACKGROUND AND SUMMARY

The present invention relates generally, according to an aspect thereof, to a milling tool for a railway track and, more specifically, to a removable cassette for holding cutting inserts on the milling tool. The present invention also relates to a railway track milling tool.

Railway tracks become worn over time and imperfections in the surface of the track can lead to problems such as vibrations in and noise resulting from trains passing over the imperfections. It is known from, for example, EP1820902B1 and DE3222208A1, to periodically mill the surfaces of the tracks using a milling tool having a plurality of replaceable cutting inserts thereon arranged to reproduce the general shape of the track.

Because of the large number of inserts that are provided on such milling tools, the milling tool can be out of service for a significant portion of time when it is necessary to index or replace one or more inserts, or when it is necessary to index or replace all inserts. It is desirable to provide a milling tool in which the indexing or replacement of inserts can be performed speedily.

Because of the complex shapes of railway tracks, a milling operation typically comprises a series of operations beginning with a roughing operation with a first tool with a plurality of straight edge cutting inserts arranged along the profile of the tool to produce a series of successive flat surfaces along the profile of the track, followed by further operations with tools with inserts arranged differently than on the first tool to produce still more flat surfaces to produce a surface that more closely approximates a smooth curve. In the past, the difficulty of securely mounting large numbers of inserts close to one another on a milling tool has interfered with eliminating multiple steps in milling a railway track. It is desirable to provide a milling tool that facilitates performing a milling operation using a single tool, or with the fewest number of tools.

According to an aspect of the present invention, a cassette for a railway track milling tool comprises a body of the cassette that, when viewed from a side thereof, defines an arc of an annulus having a curved radially outer surface between two radially extending end surfaces, the arc being less than 360 degrees, the cassette comprising a plurality of insert-receiving pockets disposed on the radially outer surface. A groove is provided in a radially inner surface of the cassette and extends in a direction away from one of the two radially extending end surfaces towards an opposite one of the two radially extending end surfaces.

### BRIEF DESCRIPTION OF THE DRAWINGS

The features and advantages of the present invention are well understood by reading the following detailed description in conjunction with the drawings in which like numerals indicate similar elements and in which:
FIG. 1A is a front side view of a milling tool according to an aspect of the present invention;
FIG. 1B is a top of a portion of a milling tool according to an aspect of the present invention showing a body of the milling tool with several cassettes removed;
FIGS. 1C and 1D are cross-sectional views of the milling tool of FIG. 1A taken at sections 1C-1C and 1D-1D, respectively;
FIG. 1E is an enlarged view of a portion of FIG. 1D;
FIG. 1F is an enlarged view of a portion of FIG. 1C;
FIG. 2A is a top perspective view of a cassette according to an aspect of the present invention;
FIG. 2B is a front side view of the cassette according to FIG. 2A;
FIG. 2C is a cross-sectional view of the cassette of FIG. 2A taken at section 2C-2C of FIG. 2B;
FIG. 2D is a right side view of the cassette according to FIG. 2A;
FIG. 2E is a rear side view of the cassette according to FIG. 2A;
FIG. 2F is a top view of the cassette according to FIG. 2A;
FIG. 2G is a bottom view of the cassette according to FIG. 2A;
FIG. 3A is a cross-sectional view of a cassette taken at section 3A-3A of FIG. 2A;
FIG. 3B is an enlarged cross-sectional view of a portion 3B of an insert shown in FIG. 3A;
FIG. 4A is a perspective view of an insert-receiving pocket for a cassette according to an aspect of the present invention;
FIG. 4B is a perspective view of an insert-receiving pocket for a cassette according to an aspect of the present invention in which an insert of the type shown in FIGS. 5A-5C is mounted;
FIG. 4C is a perspective view of an insert-receiving pocket for a cassette according to an aspect of the present invention in which an insert of the type shown in FIGS. 6A-6C is mounted;
FIG. 4D is a top plan view of an insert-receiving pocket for a cassette according to an aspect of the present invention;
FIG. 4E is a cross-sectional view of the insert-receiving pocket of FIG. 4D taken at section 4E-4E and including an insert and wedge assembly not shown in FIG. 4D;
FIG. 4F is a cross-sectional view of the insert-receiving pocket of FIG. 4D taken at section 4F-4F and including an insert and wedge assembly not shown in FIG. 4D;
FIGS. 5A, 5B, and 5C are, respectively, a perspective view, a top view, and a side cross-sectional view through a center of an insert according to an aspect of the present invention;
FIGS. 6A, 6B, and 6C are, respectively, a perspective view, a top view, and a side cross-sectional view through a center of an insert according to an aspect of the present invention;
FIG. 7A is a front side view of a milling tool according to an aspect of the present invention;
FIG. 7B is a top of a portion of a milling tool according to an aspect of the present invention showing a body of the milling tool with several cassettes removed;
FIG. 7C is a cross-sectional view of the milling tool of FIG. 7A taken at section 7C-7C;
FIG. 8A is a top perspective view of a cassette according to another aspect of the present invention;
FIG. 8B is a rear side view of the cassette according to FIG. 8A;
FIG. 8C is a top view of the cassette according to FIG. 8A;
FIG. 8D is a right side view of the cassette according to FIG. 8A;
FIG. 8E is a bottom view of the cassette according to FIG. 8A;
FIG. 8F is a cross-sectional view of the cassette of FIG. 8A taken at section 8F-8F of FIG. 8E; and
FIG. 8G is a cross-sectional view of the cassette of FIG. 8A taken at section 8G-8G of FIG. 8E.

### DETAILED DESCRIPTION

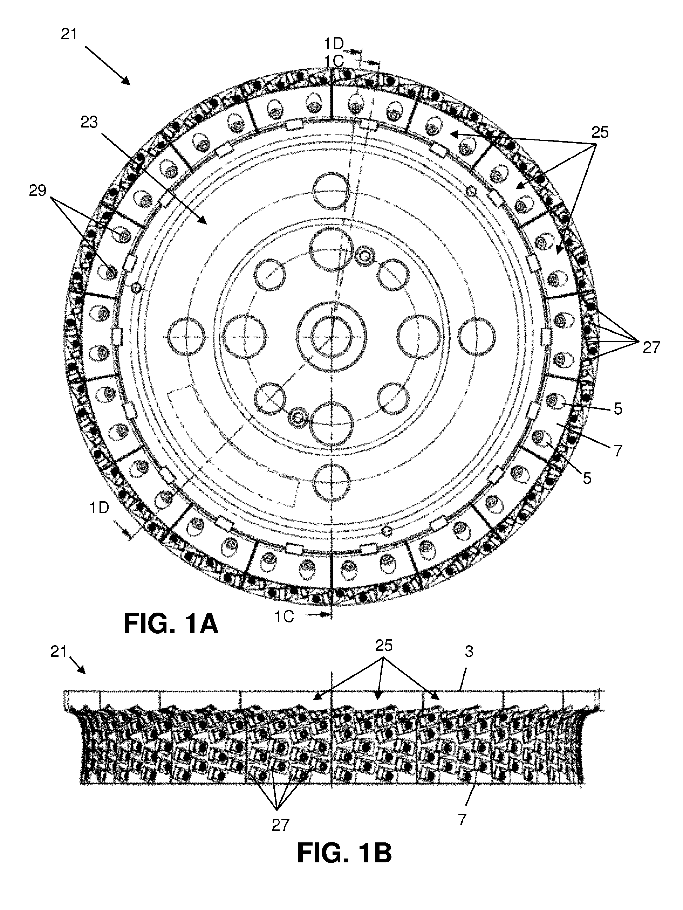

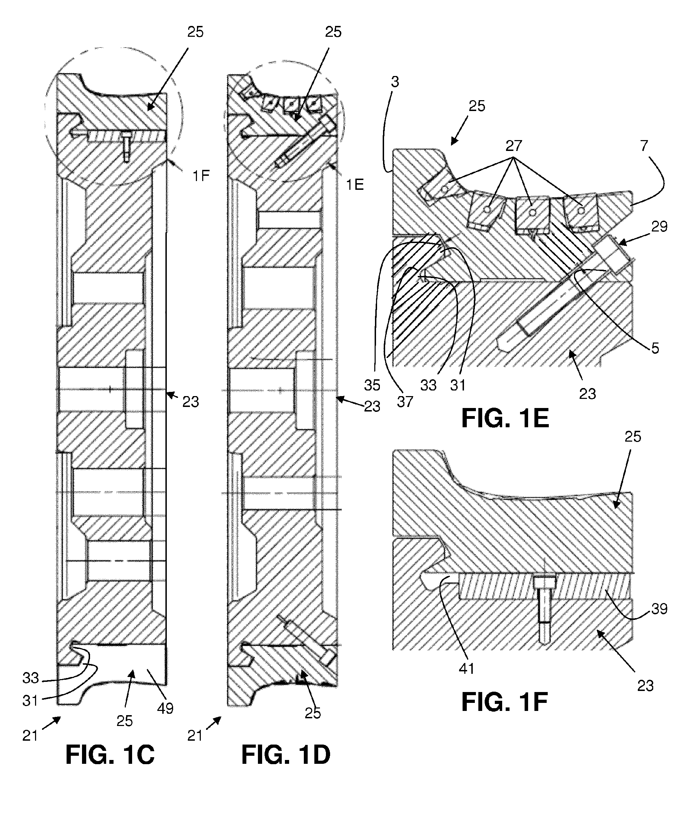

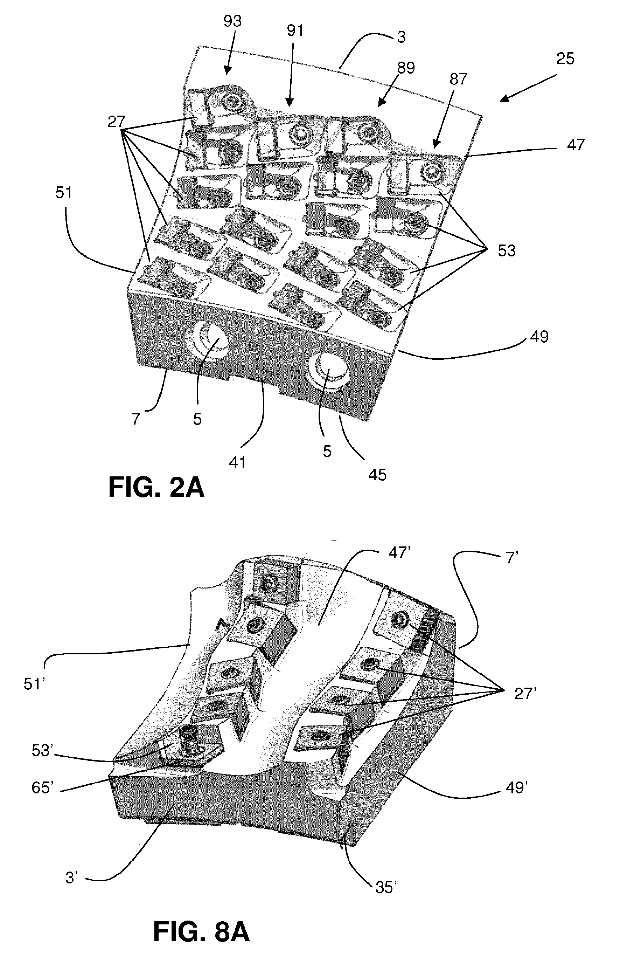

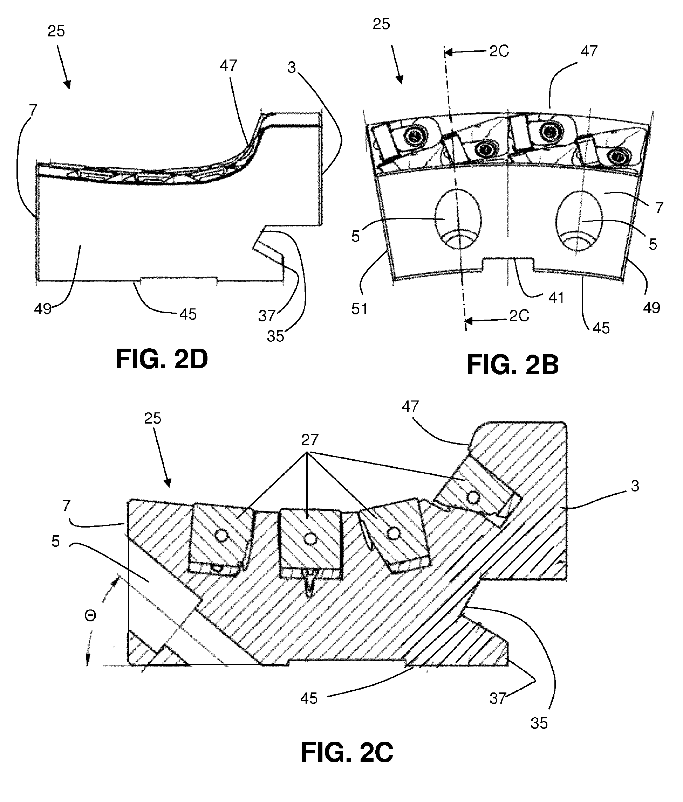

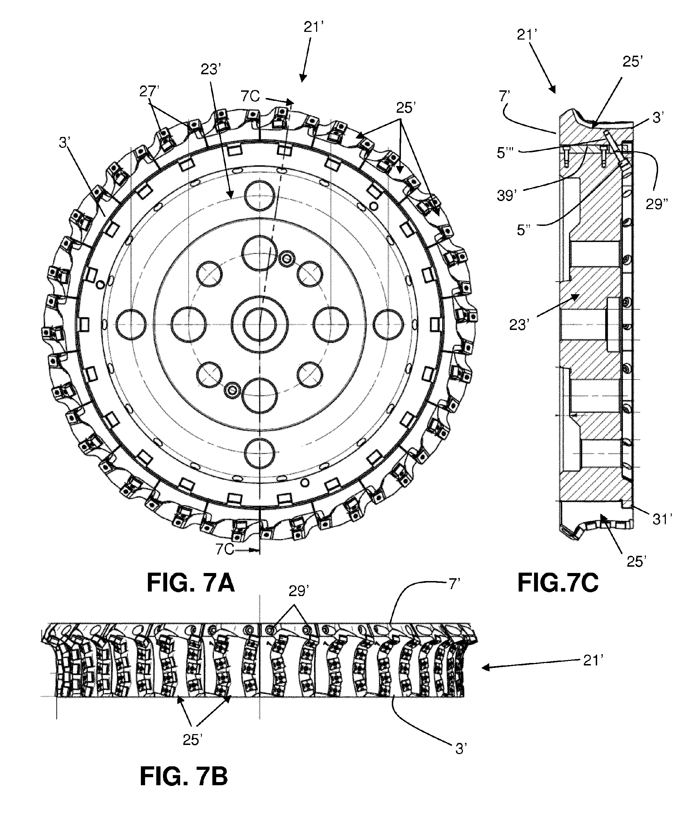

FIG. 1A-1F show a railway track milling tool 21 including a main body 23 and a plurality of cassettes 25 (seen individually in FIGS. 2A-2G). Each cassette 25 carries a plurality of inserts 27 that are arranged in what shall be referred to as a radial manner. An embodiment shown in FIGS. 7A-8G includes cassettes 25' with inserts 27' arranged in what shall be referred to as a tangential manner. Referring, first, for purposes of discussion, to the embodiment with radially arranged inserts shown in FIGS. 1A-4F, the cassettes 25 are attached to the main body 23 by means such as bolts 29 (FIGS. 1A, 1D, 1E). By providing a plurality of such cassettes 25 around the main body 23, indexing or replacement of inserts can be performed speedily with a minimum of downtime for the milling tool by removing the entire cassette and replacing it with a substitute cassette. The removed cassette can then be serviced by indexing or replacing all or selected ones of the inserts on that cassette. The removed cassette can later be replaced for another cassette that is removed for servicing.

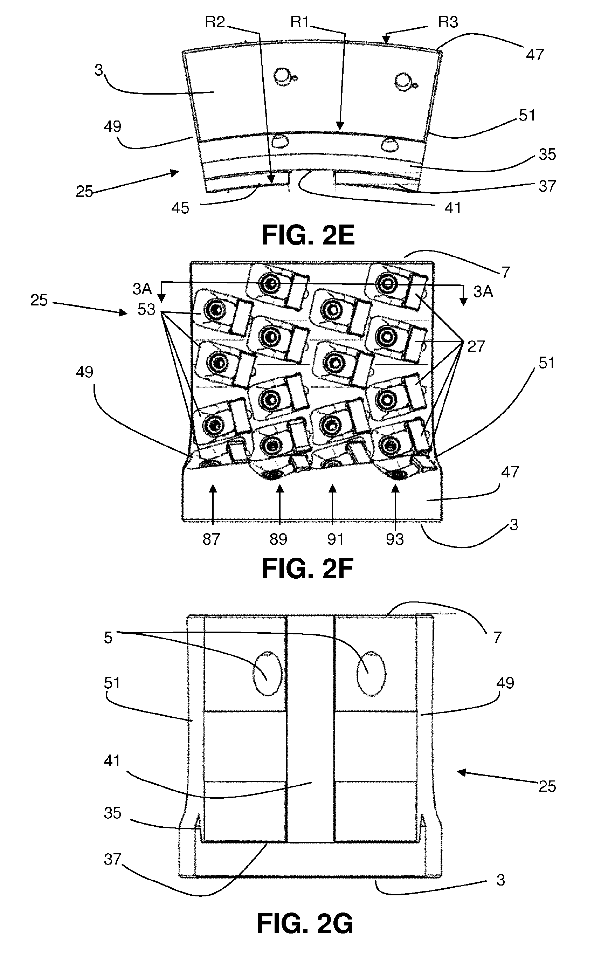

As seen in FIGS. 1C-1E, the main body 23 can include structures such as an annular ridge 31 and groove 33 for mating with corresponding grooves 35 and ridges 37 (FIGS. 1C-1E, 2C-2E, and 2G) on the cassettes 25 to facilitate retaining the cassettes in desired positions along a central axis of the milling tool 21. The main body 23 can also include structures such as axially extending (in a direction of an axis of the main body) ridge or groove structures 39 (FIGS. 1C and 1F) attached to or formed on the main body portion for mating with groove or ridge structures 41 (FIGS. 1C, 1F, 2A, 2C, 2E, and 2G) on the cassettes 25 to facilitate absorbing forces on the cassettes during a milling operation that might otherwise be transferred to the bolts 29. In the following description and claims the directional terms are generally in accordance with the orientation of the portion of the milling tool shown in FIGS. 1A and 1D.

As seen in, for example, FIGS. 1A, 2A, 2B, 2E, and 3A, a body of the cassette 25, when viewed from a side thereof, defines an arc of an annulus having a curved radially inner surface or bottom surface or support surface 45 ordinarily having a radius R2 (FIG. 2E) and a curved radially outer surface or upper surface 47 ordinarily having a radius R3 (FIG. 2E) between two radially extending end surfaces 49 and 51. The radially inner and outer surfaces 45 and 47 are curved in the sense that they follow a curve of the circumference of the generally circular milling tool 21. As seen in, e.g., FIGS. 2A, 2C, and 2D, at least the outer surface 47 will typically further be formed with a shape to generally match a shape of a railway track to be milled. As seen, for example, in FIGS. 1A-1B, 2A-2B, and 2E-3A, the arc of each cassette 25 is less than 360 degrees and, in a presently preferred embodiment for a milling tool having a diameter of 600 mm, is 20 degrees such that eighteen cassettes 25 are used to form the complete milling tool 21. Fewer or more cassettes might be used on milling tools having smaller or greater diameters.

The groove 35 on each cassette 25 is provided in and has a larger radius R1 than a radius R2 the radially inner surface 45 of the cassette. Providing the ridge 37 in the groove 35 can facilitate securing the cassette 25 to the main body 23 in a manner that reduces the possibility of the cassette being disconnected from the main body 23 because the ridge can be received in a corresponding annular groove 33 of the main body and the annular ridge 31 on the main body can be received in the groove 35.

The groove 35 extends inwardly from a first side 3 of the cassette and a through hole 5 can extend into the cassette on a second, opposite side 7 of the cassette from the first side 3. The first side 3 usually faces towards the centerline between two parallel rails. The arrangement facilitates attaching the cassette 25 to and removing the cassette from the main body 23 with bolts 29 that extend through the through holes 5 into, typically, internally threaded holes in the main body. The bolts 29 can clamp the groove 35 and ridge 37 of the cassette 25 against the annular ridge 31 and annular groove 33 of the main body 23. To this end, the through hole 5 can be formed so as to extend through the cassette at an angle Θ greater than 0° and less than 90° to an axis of the annulus, more preferably between 30° and 60°, and still more preferably between 40° and 50°.

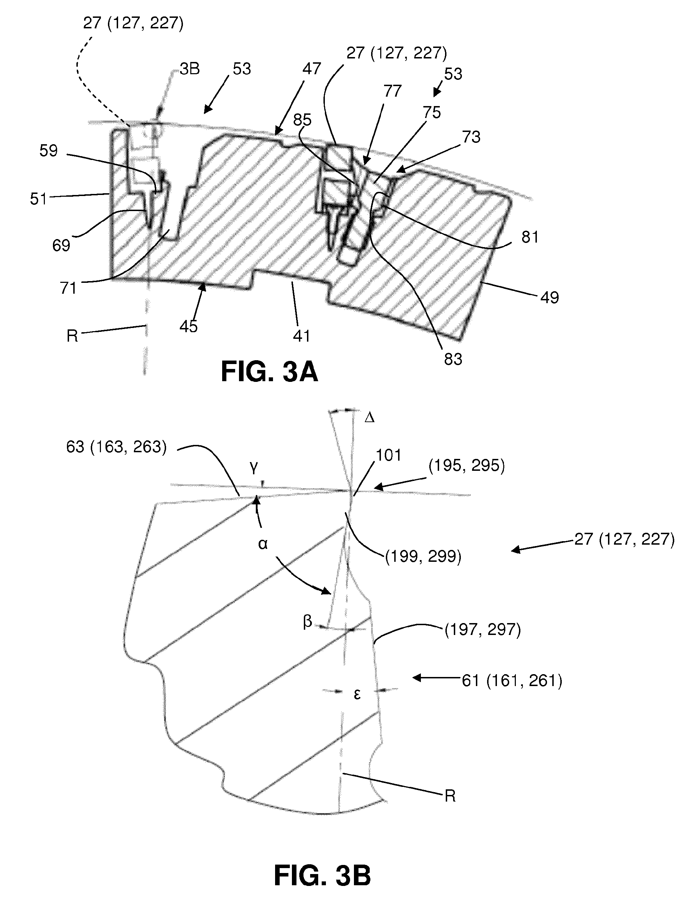

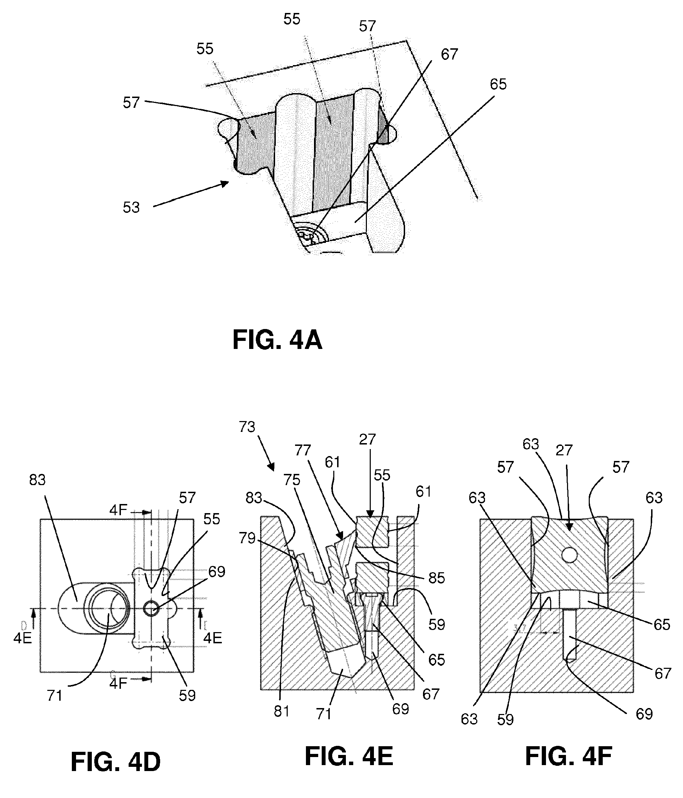

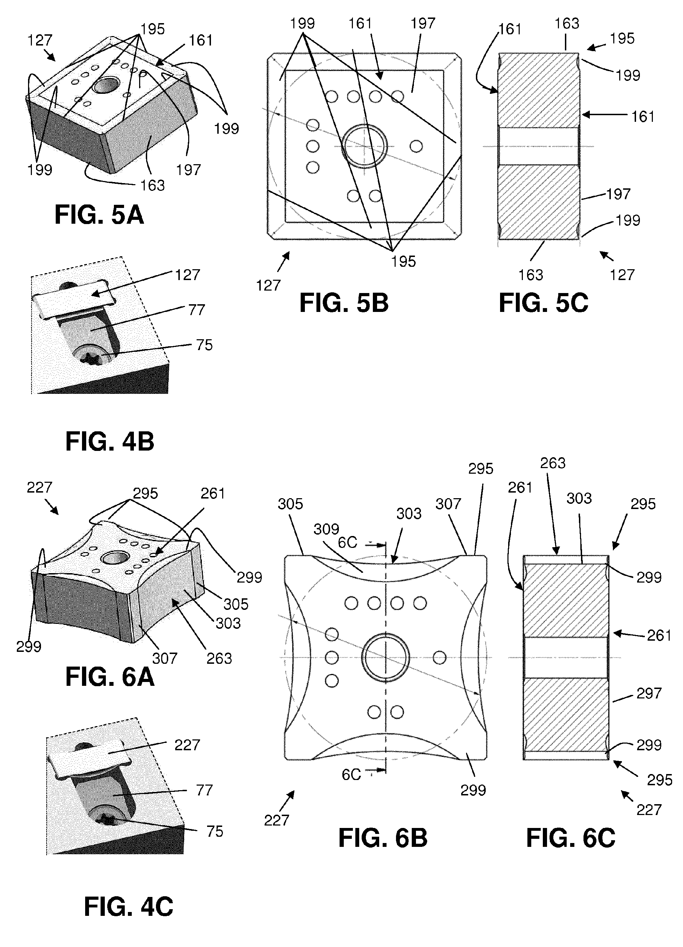

As seen, for example, in FIG. 2A, the cassette 25 comprises a plurality of insert-receiving pockets 53 disposed, preferably only, on the radially outer surface 47. The insert-receiving pockets 53 each include one bottom abutment surface 55 (FIGS. 3A, 4A-4C, and 4E) disposed generally perpendicular to two side abutment surfaces 57 (FIGS. 4A-4D, and 4F) and a pocket bottom surface 59 (FIGS. 4E and 4F). The bottom abutment surface 55 ordinarily has a greater area than the two side abutment surfaces 57 and, ordinarily, the pocket bottom surface 59 and a main supporting surface of at the top surface 61 of the inserts 27 abuts the bottom abutment surface. Side supporting surfaces 63 of the inserts 27 can be disposed around the top surface 61 and abut the side abutment surfaces 57 and either the pocket bottom surface 59 or a shim 65 (FIGS. 4A, 4E, 4F) secured to the pocket bottom surface by means such as an externally threaded member such as a screw or bolt 67 that extends through a countersunk hole in the shim and mates with a threaded hole 69 in the pocket bottom surface and clamps the shim in place.

When the cassette 25 is mounted on the main body 23, the two side abutment surfaces 57 and the bottom abutment surface 55 are generally radially extending surfaces (i.e., extend generally in a direction of a radius of the tool 21) and the pocket bottom surface 59 is a generally laterally extending surface (i.e., extending generally perpendicular to the radius in a direction of an axis of the tool 21). As seen in FIGS. 3A, 4D, and 4E, a threaded opening 71 is ordinarily provided in each insert-receiving pocket 53 and a wedge assembly 73 comprising an externally threaded clamping member 75, such as a screw or bolt, and a wedge 77 is provided. The externally threaded clamping member 75 extends through a countersunk hole 79 in the wedge 77 and threads on the externally threaded clamping member mating with threads on the threaded opening 71. As seen, for example, in FIG. 4E, a first surface 81 of the wedge 77 can abut against a sloped surface 83 of the pocket 53, and a second surface 85 of the wedge can abut against a main supporting surface of the top surface 61 of the insert 27 (if the insert is of a type that is indexable so that it has two identical main supporting surfaces - otherwise, the second surface of the wedge abuts against a top or second supporting surface of the insert). When the externally threaded clamping member 75 is tightened, the wedge 77 is moved downwardly into the pocket 53 and moves to clamp the insert 27 between the second surface 85 of the wedge and the bottom abutment surface 55 of the pocket as seen, for example, in FIG. 3A.

In the embodiment shown in FIGS. 1A-2G, on the radially outer surface 47 of the cassette and in a direction from a first one of the radially extending end surfaces 47 to a second one of the radially extending end surfaces 49, four rows of insert-receiving pockets 87, 89, 91, and 93 (e.g., FIGS. 2A and 2F). In other embodiments, fewer or more rows of inserts can be provided (e.g., embodiment shown in FIGS. 7A-8G has two rows of pockets), however, providing at least four rows facilitates providing multiple teeth on each cassette in a variety of useful orientations in different ones of the rows. A first row 87 and a third row 91 of the four rows of insert-receiving pockets can each include a first plurality of insert-receiving pockets 53 arranged identically in each of the first and third rows, and a second row 89 and a fourth row 93 of the four rows of insert-receiving pockets can each include a second plurality of insert-receiving pockets arranged identically in each of the second and fourth rows. While the second and fourth rows 89 and 93 can have the same number of pockets 53 as the first and second rows 87 and 91, ordinarily, at least two rows of the four rows of insert-receiving pockets have a different number of insert-receiving pockets than two other rows of the four rows of insert-receiving pockets. While the second and fourth rows 89 and 93 can have the same orientation of pockets 53 as the first and second rows 87 and 91, ordinarily, insert-receiving pockets in at least two rows of the four rows of insert-receiving pockets are laterally offset relative to insert-receiving pockets in two other rows of the four rows of insert-receiving pockets. In this way, a plurality of inserts can perform milling operations on different portions of the railway track, which can result in a smoother finish that can be obtained quickly without the need to change milling tools to machine or finish different portions of the railway track.

In each cassette 25, a plurality of inserts 27 are receivable in corresponding ones of the plurality of insert-receiving pockets 53. Ordinarily, the inserts 27 are indexable to a plurality of positions in the insert-receiving pockets. Presently preferred embodiments of the inserts 27 are shown in FIGS. 5A-5C and 6A-6C. The inserts 127 shown in FIGS. 5A-5C are anticipated to be of more use for performing a roughing function, while the inserts 227 shown in FIGS. 6A-6C are anticipated to be of more use for performing a finishing function.

In the presently preferred embodiment, the inserts 127 and 227 are generally square and include four side insert-supporting surfaces 163 and 263 and at least one top surface 161 and 261, and have at least four cutting edges 195 and 295 at an intersection between the top surface and the four side insert-supporting surfaces. In presently preferred embodiments, the inserts 127 and 227 are double-sided with two identical top (or top and bottom) sides 161 and 261 on opposite sides of the inserts so that, in addition to being indexable to four positions on one side, the insert can be flipped over and are indexable to four positions on the opposite side. Other insert shapes can, however, be provided, such as circular inserts, triangular inserts, rectangular (non-square) inserts, trigonal inserts, and the like, and the inserts need not be double sided.

With regard to the illustrated, square inserts, as seen, for example, in FIG. 3B, each top surface 161 and 261 can include a main supporting surface portion 197 and 297 that (as seen for example in FIG. 3A) can abut against the second surface 85 of the wedge 77 or against the bottom supporting surface 55 of the pocket 53 depending upon how the insert 127 and 227 is flipped in the pocket. Each top surface 161 and 261 ordinarily also includes a rake surface portion 199 and 299 adjacent and inward of the four cutting edges 195 and 295. The rake surface portions 199 and 299 can define an angle α of less than 90 degrees with an adjacent one of the four side insert-supporting surfaces 163 and 263, which can facilitate providing a positive rake angle β (illustrated as the angle between the rake surface 199 and 299 and a radius R of the milling tool) when the insert 127 and 227 is mounted in the pocket 53, even though the insert is oriented so that the side insert-supporting surfaces 163 and 263 (the side insert-supporting surfaces 163 and 263 seen in FIG. 3B have been indexed to function as clearance) form a non-zero clearance angle γ.

By positioning the insert radially, i.e., so that its major dimension (the top surfaces 161 and 261) extends in a generally radial direction of the milling tool, it becomes more convenient to provide a complex geometry to the inserts without compromising stability of the insert mounting to the cassette 25 than tends to be possible with an insert that is mounted tangentially, i.e., with its major dimension extending generally in a direction of a tangent to the milling tool. The top surfaces 161 and 261 of the radially mounted inserts 127 and 227 can be provided with substantial areas that form supporting surface portions 197 and 297 while also being provided with complex cutting edge geometries that can facilitate performing a milling operation such as by providing a positive rake angle at the cutting edge. Where space on the rake surface is more limited, such as in a tangentially mounted insert, options for complex cutting edge geometries are more limited. As seen in FIG. 3B, the top surfaces 161 and 261 can form a negative angle ε with the radius R of the milling tool.

By positioning the inserts radially, it is also possible to secure the inserts to the cassette in a manner that will tend to minimize shear stresses on clamping screws as forces on the clamping screws will tend to be along their axes.

By positioning the inserts radially, it is also possible to mount a large number of inserts on the cassette as their major dimensions extend in a direction of the milling tool's radius, not around its circumference as is typically the case with tangentially mounted inserts. Nonetheless, a cassette according to an aspect of the present invention can be useful in milling tools with tangentially oriented inserts and/or with radially oriented inserts at least because of the manner by which it facilitates servicing of the milling tool.

As seen in FIG. 3B, each insert can include a negative land 101 that defines an angle Δ with the radius R of the milling tool, which can facilitate providing a longer life to the cutting edge.

The side supporting surfaces 263 of the insert 227 shown in FIGS. 6A-6C are provided with a central recessed portion 303 so that the cutting edge 295 includes left and right tooth portions 305 and 307 on opposite sides of the recessed portion and extending to or at least toward a corner of the square. Parts of the top surface 261 adjacent the left and right tooth portions 305 and 307, i.e., rake surface portions 299, can define an angle of less than 90 degrees with an adjacent one of the four side insert-supporting surfaces 263 which can facilitate providing a positive rake angle at the cutting edge by each of the tooth portions. Parts 309 of the top surface 261 adjacent the central recessed portion 303 can define an angle of greater than 90 degrees with an adjacent one of the four side insert-supporting surfaces. With this structure, each insert 227 presents two discrete teeth 305 and 307 that can be oriented to provide a positive rake angle while the recessed portion 303 may or may not perform a cutting operation and can be provided with a negative rake angle to minimize risk of damage to that non-cutting portion of the insert. The provision of teeth 305 and 307 on opposite sides of the recessed portion 303 facilitates milling more finished shapes than might be possible with a square insert such as that shown in FIGS. 5A-5C. Each tooth 305 and 307 produces a separate surface and appropriate orientation of inserts 227 with teeth 305 and 307 on each cutting edge 295 can result in the production of substantially more discrete surfaces, and can consequently more closely approximate a smooth surface, than can be provided with inserts with a single straight cutting edge. To the extent that the recessed portion 303 contacts a workpiece, it may be desirable that it contact the workpiece only minimally to smooth surfaces on the workpiece between the teeth 305 and 307. By providing the parts 309 of the top surface 261 adjacent the central recessed portion 303 so that they define an angle of greater than 90 degrees with an adjacent one of the four side insert-supporting surfaces 263, the parts 309 will tend to resist breakage, particularly compared to inserts that do not have a central recessed portion as, in such inserts, the straight cutting edge that is disposed where, in the insert 263, the central recessed portion is disposed will ordinarily be at the greatest depth of a cut and subjected to the greatest forces. In the insert 227, the central recessed portion 303 is subjected to no or different forces, while the teeth 305 and 307 can be used to form small, discrete surfaces without necessarily cutting deep into the workpiece.

The milling tool 21 may be provided with a single type of insert, e.g., the insert 127 or the insert 227, or with a variety of different types of inserts mounted together. In this way, rather than first performing a rough milling operation, then performing a separate finish milling operation, a single milling operation may be sufficient to fix a railway track.

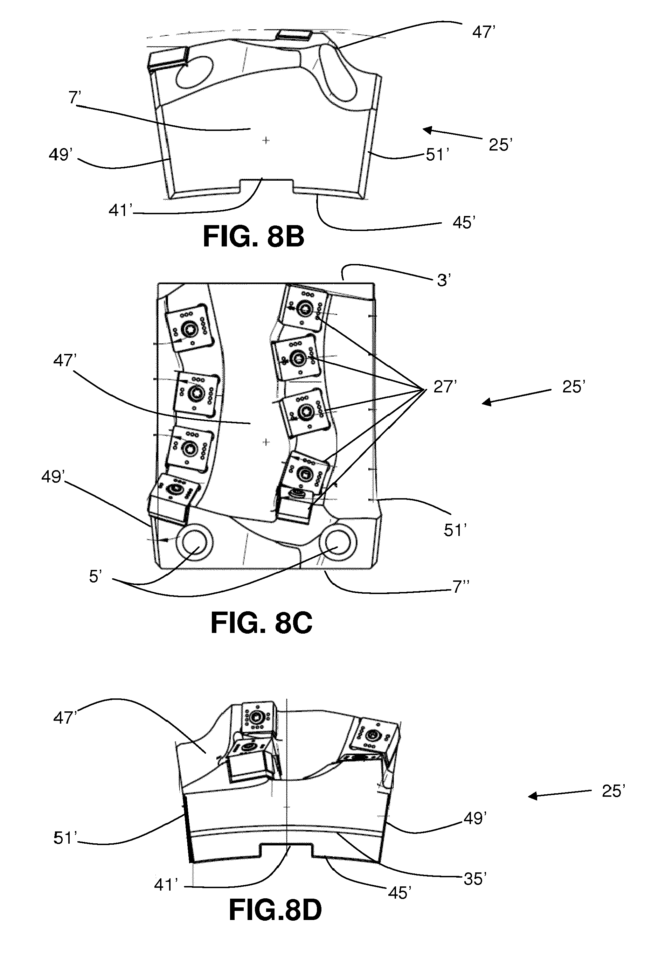

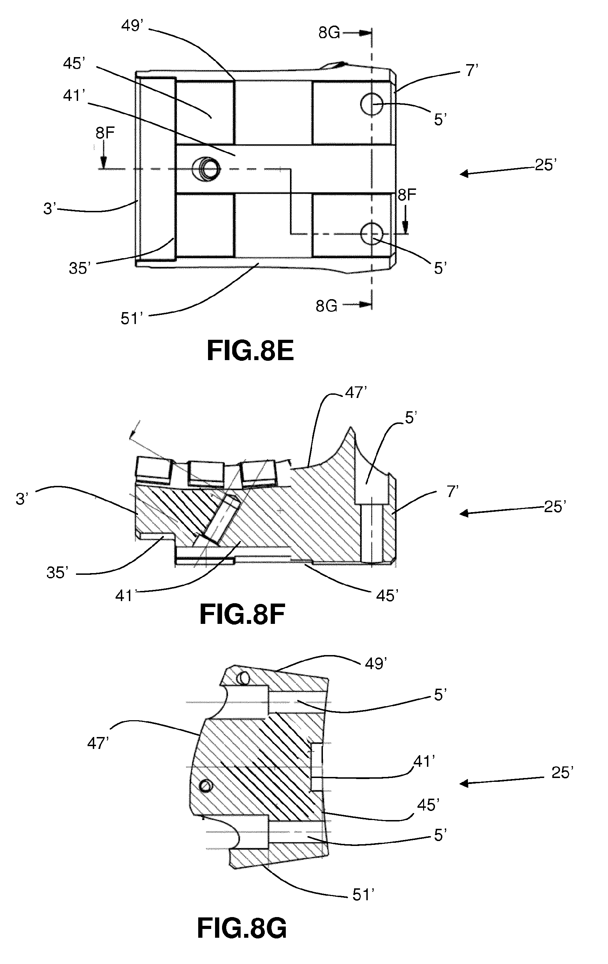

FIGS. 7A-7C show a railway track milling tool 21' including a main body 23' and a plurality of cassettes 25' (seen individually in FIGS. 8A-8G). Each cassette 25 carries a plurality of tangentially arranged inserts 27' disposed in pocket 53' (FIG. 8A) in which two side abutment surfaces and the pocket bottom surface are generally radially extending surfaces and the bottom abutment surface is a generally laterally extending surface. While the milling tool 21' may include an annular groove and ridge on the main body 23' and corresponding ridges and grooves on the cassettes having the same general configuration as the milling tool 21, a different embodiment is shown in FIGS. 7A-7C. In this embodiment, the cassettes 25' are attached to the main body 23' by means such as bolts 29' (FIG. 7B) and/or 29". By providing a plurality of such cassettes 25' around the main body 23', indexing or replacement of inserts can be performed speedily with a minimum of downtime for the milling tool by removing the entire cassette and replacing it with a substitute cassette. The removed cassette can then be serviced by indexing or replacing all or selected ones of the inserts on that cassette. The removed cassette can later be replaced for another cassette that is removed for servicing.

As seen in FIGS. 7C, the main body 23' can include structures such as an annular ridge 31 for mating with a corresponding groove 35' (FIGS. 7C, 8A, and 8D-8F) on the cassettes 25' to facilitate retaining the cassettes in desired positions along a central axis of the milling tool 21'. The main body 23' can also include structures such as axially extending (in a direction of an axis of the main body) ridge or groove structures 39' (FIGS. 7C) attached to or formed on the main body portion for mating with groove or ridge structures 41' (FIGS. 7C, 8B, and 8D-8F) on the cassettes 25' to facilitate absorbing forces on the cassettes during a milling operation that might otherwise be transferred to the bolts 29'.

As seen in, for example, FIGS. 7A, 8B, 8D, and 8G, a body of the cassette 25', when viewed from a side thereof, defines an arc of an annulus having a curved radially inner surface or bottom surface or support surface 45' ordinarily having a radius and a curved radially outer surface 47' ordinarily having a radius between two radially extending end surfaces 49' and 51'. The radially inner and outer surfaces 45' and 47' are curved in the sense that they follow a curve of the circumference of the generally circular milling tool 21'. As seen in, e.g., FIGS. 2A, 2C, and 2D, at least the outer surface 47' will typically further be formed with a shape to generally match a shape of a railway track to be milled. As seen, for example, in FIGS. 7A-7B, 8A-8B, 8D -8E, and 8G, the arc of each cassette 25' is less than 360 degrees and, in a presently preferred embodiment for a milling tool having a diameter of 600 mm, is 20 degrees such that eighteen cassettes 25' are used to form the complete milling tool 21'. Fewer or more cassettes might be used on milling tools having smaller or greater diameters.

The groove 35' on each cassette 25' is provided in a first side 3' of the cassette and has a larger radius R1 than a radius R2 the radially inner surface 45' of the cassette. The groove 35' extends inwardly from the first side 3' and a through hole 5' can extend into the cassette on or near a second, opposite side 7' of the cassette from the first side 3'. The opposite side 7' usually faces towards the centerline between two parallel rails. The arrangement facilitates attaching the cassette 25' to and removing the cassette from the main body 23' with bolts 29' and 29" that extend through the through holes 5' into, typically, internally threaded holes in the main body 23'. The bolts 29' and 29" can clamp the groove 35' of the cassette 25' against the annular ridge 31' of the main body 23. To this end, a through hole 5" (FIG. 7C) can be formed so as to extend through the main body 23' and into an internally threaded hole 5"' in the cassette 25' at an angle greater than 0° and less than 90° to an axis of the annulus, more preferably between 30° and 60°, and still more preferably between 40° and 50°. The bolt 29" can mate with threads in a hole in the cassette 25' and draw the walls of the groove 35' of the cassette against the walls of the ridge 31' as the bolt is tightened.

As seen, for example, in FIG. 8A, the cassette 25' comprises a plurality of insert-receiving pockets 53' disposed on the radially outer surface 47'. The insert-receiving pockets 53' each include one bottom abutment surface disposed generally perpendicular to two side abutment surfaces. The bottom abutment surface ordinarily has a greater area than the two side abutment surfaces. Side supporting surfaces of the inserts 27' can be disposed around the top surface 47' and abut the side abutment surfaces and either the bottom abutment surface or a shim 65' (FIG. 8A) secured to the bottom abutment surface by means such as an externally threaded member such as a screw or bolt that extends through a countersunk hole in the shim and mates with a threaded hole in the pocket bottom surface and clamps the shim in place.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A railway track milling tool (21) cassette (25, 25') comprising a body of the cassette (25, 25') that, when viewed from a side thereof, defines an arc of an annulus having a curved radially outer surface (47, 47') between two radially extending end surfaces (49, 51; 49', 51'), the arc being less than 360 degrees, the cassette (25, 25') comprising a plurality of insert-receiving pockets (53, 53') disposed on the radially outer surface (47, 47'), **characterized in that** a groove (35, 35') is provided in a radially inner surface (45, 45') of the cassette and extends in a direction away from one of the two radially extending end surfaces (49, 51; 49', 51') towards an opposite one of the two radially extending end surfaces.

2. The cassette (25, 25') as set forth in claim 1, **characterized in that** the radially inner surface (45, 45') of the cassette is a curved surface having a radius (R2).

3. The cassette (25, 25') as set forth in claim 2, **characterized in that** the groove (35, 35') has a larger radius (R1) than the radius (R2) the radially inner surface (45, 45').

4. The cassette (25) as set forth in any of claims 1-3, comprising a ridge (37) in the groove (35).

5. The cassette (25) as set forth in any of claims 1-4, **characterized in that** the groove (35) extends inwardly from a first side (3) of the cassette and **in that** a through hole (5) extends into the cassette on a second, opposite side (7) of the cassette from the first side (3).

6. The cassette (25) as set forth in claim 5, **characterized in that** the through hole (5) extends through the cassette at an angle (Θ) greater than 0° and less than 90° to an axis of the annulus, more preferably between 30° and 60°, and still more preferably between 40° and 50°.

7. The cassette (25, 25') as set forth in any of claims 1-6, **characterized in that** at least some of the insert-receiving pockets (53, 53') include one bottom abutment surface (55, 55') disposed generally perpendicular to two side abutment surfaces (57, 57') and a pocket bottom surface (59, 50').

8. The cassette (25) as set forth in claim 7, **characterized in that** the bottom abutment surface (55, 55') has a greater area than the two side abutment surfaces (57, 57').

9. The cassette (25) as set forth in any of claims 7-8, **characterized in that** the cassette (25) comprises a shim (65) attached to the pocket bottom surface (59) by an externally threaded member (67) that mates with an internally threaded opening (69) in the body of the cassette (25).

10. The cassette (25') as set forth in any of claims 7-9, **characterized in that** the two side abutment surfaces (57') and the pocket bottom surface (59') are generally radially extending surfaces and the bottom abutment surface (55') is a generally laterally extending surface.

11. The cassette (25) as set forth in any of claims 1-10, **characterized in that** the cassette (25) comprises a threaded opening (71) in each insert-receiving pocket (53) and a wedge assembly (73) comprising an externally threaded clamping member (75) and a wedge (77), the externally threaded clamping member (75) extending through the wedge (77) and threads on the externally threaded clamping member (75) mating with threads on the threaded opening (71).

12. The cassette (25) as set forth in any of claims 1-11, **characterized in that** the cassette (25) comprises, on the radially outer surface (47) and in a direction from the one of the two radially extending end surfaces (49, 51) to the opposite one of the two radially extending end surfaces (49, 51), at least two rows (87, 89, 91, 93) of insert-receiving pockets (53).

13. The cassette (25) as set forth in claim 12, **characterized in that** the cassette comprises four rows (87, 89, 91, 93) of insert-receiving pockets (53), a first row (87) of the four rows (87, 89, 91, 93) insert-receiving pockets (53) and a third row (91) of the four rows of insert-receiving pockets (53) each includes a first plurality of insert-receiving pockets (53) arranged identically in each of the first and third rows (87 and 91), and a second row (89) of the four rows of insert-receiving pockets (53) and a fourth row (93) of the four rows of insert-receiving pockets (53) each includes a second plurality of insert-receiving pockets (53) arranged identically in each of the second and fourth rows.

14. The cassette (25) as set forth in claim 13, **characterized in that** at least one (87 and 91) of the at least two rows (87, 89, 91, 93) of insert-receiving pockets (53) have a different number of insert-receiving pockets (53) than at least one other row (89 and 93) of the at least two rows of insert-receiving pockets (53).

15. A railway track milling tool (21) having a main body (23), **characterized in that** it comprises structures such as an annular ridge (31) and groove (33) that mates with corresponding groove (35) and ridge (37) on a cassette (25) according to anyone of claims 1-14.
